# EUROPEAN PATENT SPECIFICATION

(11) **EP 2 571 689 B1**
(45) Date of publication and mention of the grant of the patent: **16.11.2016**
(21) Application number: 11724090.3
(22) Date of filing: 13.05.2011
(51) Int. Cl.: B32B 27/08, B32B 27/18, B32B 27/32, C08K 3/00, C08K 5/00, C08L 23/14, C08L 23/12

(54) **A MULTILAYER SHEET, A THERMOFORMED ARTICLE, AND A METHOD FOR MAKING THE SAME**
MEHRSCHICHTIGE FOLIE, THERMOGEFORMTER ARTIKEL, UND VERFAHREN ZU DESSEN HERSTELLUNG
FEUILLE MULTICOUCHE, ARTICLE THERMOFORMÉ, ET PROCÉDÉ DE FABRICATION DE CELUI-CI

(30) Priority: 18.05.2010 US 345635 P
(43) Date of publication of application: 27.03.2013
(60) Divisional application: 16193538.2
(73) Proprietor: Dow Global Technologies LLC, Midland, MI 48674 (US)
(72) Inventor: BONAVOGLIA, Barbara, I-43003 Tarragona (IT); BRUNNER, Kurt, CH-8038 Zuerich (CH); SANDKUEHLER, Peter, E-43003 Tarrangona (ES)
(74) Representative: Boult Wade Tennant
(86) International application number: PCT/US2011/036463
(87) International publication number: WO 2011/146338

(56) References cited:
- US-A1- 2007 184 259
- DATABASE WPI Week 200414 Thomson Scientific, London, GB; AN 2004-137384 XP002649804, -& JP 2003 321070 A (JAPAN POLYCHEM CORP) 11 November 2003 (2003-11-11)

## Description

### Field of Invention

The instant invention relates to a multilayer sheet, a thermoformed article, and a method for making the same.

### Background of the Invention

Preventing growth of bacteria and fungi is a major important concern of the food industry. Typically, thermoformed trays with different barrier properties facilitate increased shelf life of food products. In addition, such thermoformed trays require acceptable sealing properties. However, currently available options fail to address all of the concerns of the food industry.

Therefore, there is a need for a thermoformed packaging device with improved antibacterial and antifungal properties while maintaining acceptable sealing properties. Furthermore there is a need for a process for making such thermoformed packaging devices having improved antibacterial and antifungal properties while maintaining acceptable sealing properties.

US-A-2007/184259 describes a multilayer sheet comprising at least one foamed propylene polymer layer and at least one non-foamed polymer layer.

JP-A-2003/321070 describes an antibacterial film for sealing containers for food with immersion water.

### Summary of the Invention

The instant invention provides a multilayer sheet, a thermoformed article, and a method for making the same.

In one embodiment, the instant invention provides a multilayer sheet comprising (a) at least one sealant layer comprising: from 0.02 to less than 1 percent by weight of one or more antimicrobial agents, based on the total weight of the sealant layer; at least 20 percent by weight of a base polymer, based on the total weight of the sealant layer, wherein said base polymer comprises a propylene/ethylene copolymer composition, wherein said propylene/ethylene copolymer has a crystallinity in the range of from 1 percent by weight to 30 percent by weight as measured by DSC, i.e. a heat of fusion in the range of from 2 Joules/gram to 50 Joules/gram, and a DSC melting point in the range of 25° C to 110° C; and from 10 to less than 80 percent by weight of a secondary polymer selected from the group consisting of polypropylene homopolymer, polypropylene random copolymer, impact modified polypropylene, and combinations thereof; and (b) at least one core layer in contact with said at least one sealant layer, wherein said core layer comprises a core polymer selected from the group consisting of polypropylene homopolymer, polypropylene random copolymer, impact modified polypropylene, and combinations thereof.

In an alternative embodiment, the instant invention further provides a thermoformed article comprising the multilayer sheet, as described hereinabove.

In another alternative embodiment, the instant invention further provides a method for making a thermoformed article comprising the steps of: (1) selecting a multilayer sheet comprising (a) at least one sealant layer comprising: from 0.02 to less than 1 percent by weight of one or more antimicrobial agents, based on the total weight of the sealant layer; at least 20 percent by weight of a base polymer, based on the total weight of the sealant layer, wherein said base polymer comprises a propylene/ethylene copolymer composition, wherein said propylene/ethylene copolymer has a crystallinity in the range of from 1 percent by weight to 30 percent by weight as measured by DSC, i.e. a heat of fusion in the range of from 2 Joules/gram to 50 Joules/gram, and a DSC melting point in the range of 25° C to 110° C; and from 10 to less than 80 percent by weight of a secondary polymer selected from the group consisting of polypropylene homopolymer, polypropylene random copolymer, impact modified polypropylene, and combinations thereof; (b) at least one core layer in contact with said at least one sealant layer, wherein said core layer comprises a core polymer selected from the group consisting of polypropylene homopolymer, polypropylene random copolymer, impact modified polypropylene, and combinations thereof; and (2) forming said multilayer sheet into an article via thermoforming process.

In an alternative embodiment, the instant invention provides a multilayer sheet, a thermoformed article, and method of making the same, in accordance with any of the preceding embodiments, except that the multilayer sheet is a coextruded sheet or laminated sheet.

In an alternative embodiment, the instant invention provides a multilayer sheet, a thermoformed article, and method of making the same, in accordance with any of the preceding embodiments, except that the multilayer sheet has a thickness in the range 100 to 5000 µm.

In an alternative embodiment, the instant invention provides a multilayer sheet, a thermoformed article, and method of making the same, in accordance with any of the preceding embodiments, except that the sealant layer has a thickness in the range 5 to 500 µm.

In an alternative embodiment, the instant invention provides a multilayer sheet, a thermoformed article, and method of making the same, in accordance with any of the preceding embodiments, except that the sealant layer comprises 5 to 10 percent of the thickness of the multilayer sheet.

In an alternative embodiment, the instant invention provides a multilayer sheet, a thermoformed article, and method of making the same, in accordance with any of the preceding embodiments, except that the sealant layer comprises from 200 to 500 ppm by weight of one or more antimicrobial agents.

In an alternative embodiment, the instant invention provides a multilayer sheet, a thermoformed article, and method of making the same, in accordance with any of the preceding embodiments, except that the core layer further comprises one or more nucleating agents, one or more antistatic agents, one or more antioxidants.

In an alternative embodiment, the instant invention provides a multilayer sheet, a thermoformed article, and method of making the same, in accordance with any of the preceding embodiments, except that the core layer further comprises a foam layer.

In an alternative embodiment, the instant invention provides a multilayer sheet, a thermoformed article, and method of making the same, in accordance with any of the preceding embodiments, except that the multilayer sheet further comprises one or more regrind layers, one or more functional layers, or one or more tie layers, and combinations thereof.

In an alternative embodiment, the instant invention provides a multilayer sheet, a thermoformed article, and method of making the same, in accordance with any of the preceding embodiments, except that the antimicrobial agent is an organic based antimicrobial agent or an inorganic based antimicrobial agent such as a silver based antimicrobial agent, or an organosilane having a quaternary ammonium active group based antimicrobial agent.

In an alternative embodiment, the instant invention provides a thermoformed article, and method of making the same, in accordance with any of the preceding embodiments, except that the thermoformed article further comprises a cap layer comprising a film, wherein said cap layer is at least partially in contact with said sealant layer.

In an alternative embodiment, the instant invention provides a thermoformed article, and method of making the same, in accordance with any of the preceding embodiments, except that the film comprises polyethylene.

In an alternative embodiment, the instant invention provides a thermoformed article, and method of making the same, in accordance with any of the preceding embodiments, except that the film comprises one or more layers.

### Brief Description of the Drawings

For the purpose of illustrating the invention, there is shown in the drawings a form that is exemplary; it being understood, however, that this invention is not limited to the precise arrangements and instrumentalities shown.
**Fig. 1** is a first illustrative embodiment of a multilayer sheet;
**Fig. 2** is a second illustrative embodiment of a multilayer sheet;
**Fig. 3** is a third illustrative embodiment of a multilayer sheet; and
**Fig.4** is a fourth illustrative embodiment of a multilayer sheet; and
**Fig**.**5** is a graph illustrating the relationship between seal strength measured in N/15mm as a function of sealing temperature measured in degrees Celsius.

### Detailed Description of the Invention

The instant invention provides a multilayer sheet, a thermoformed article, and a method for making the same. The multilayer sheet according to present invention comprises (a) at least one sealant layer comprising: from 0.02 to less than 1 percent by weight of one or more antimicrobial agents, based on the total weight of the sealant layer; at least 20 percent by weight of a base polymer, based on the total weight of the sealant layer, wherein said base polymer comprises a propylene/ethylene copolymer composition, wherein said propylene/ethylene copolymer has a crystallinity in the range of from 1 percent by weight to 30 percent by weight as measured by DSC, i.e. a heat of fusion in the range of from 2 Joules/gram to 50 Joules/gram, and a DSC melting point in the range of 25° C to 110° C; and from 10 to less than 80 percent by weight of a secondary polymer selected from the group consisting of polypropylene homopolymer, polypropylene random copolymer, impact modified polypropylene, and combinations thereof; and (b) at least one core layer in contact with said at least one sealant layer, wherein said core layer comprises a core polymer selected from the group consisting of polypropylene homopolymer, polypropylene random copolymer, impact modified polypropylene, and combinations thereof.

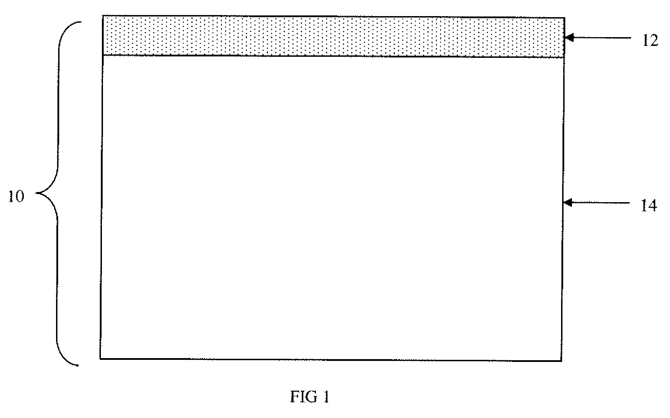

The multilayer sheet comprises at least one sealant layer, and at least one core layer in contact with the at least one sealant layer. Referring to the drawings wherein like numerals indicate like elements, there is shown, in figure 1, a first illustrative embodiment of a multilayer sheet 10 comprising a sealant layer 12, and a core layer 14.

The multilayer sheet may further include one or more regrind layers, as described hereinbelow, one or more functional layers, as described hereinbelow, one or more tie layers, as described hereinbelow, and combinations thereof. The multilayer sheet according to the present invention may have any configuration. Exemplary configurations are shown in figures 1 to 4.

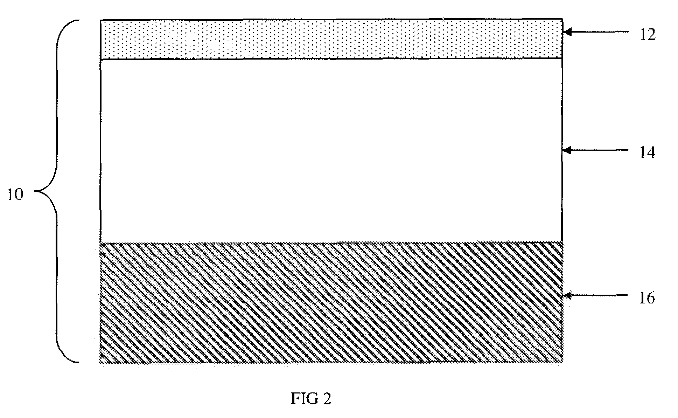

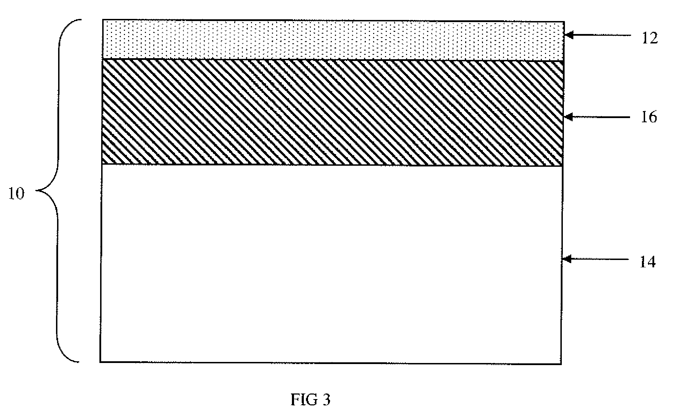

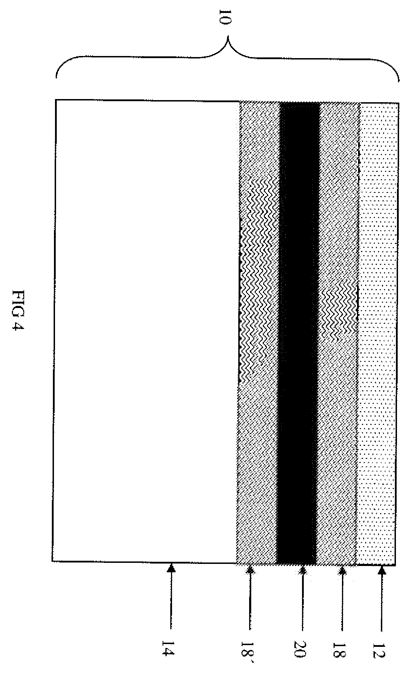

Referring to figure 2, there is shown a second illustrative embodiment of the multilayer sheet 10 comprising a sealant layer 12, or core layer 14, and a regrind layer 16. Referring to figure 3, there is shown a third illustrative embodiment of the multilayer sheet 10 comprising a sealant layer 12 regrind layer 16, and a core layer 14. Referring to figure 4, there is shown a fourth illustrative embodiment of the multilayer sheet 10 comprising a sealant layer 12, tie layer 18, functional layer 20, tie layer 18', and core layer 14.

The multilayer sheet has a thickness in the range of from 100 to 5000 µm; for example, from 100 to 4500 µm; or in the alternative, from 100 to 4000 µm; or in the alternative, from 100 to 3000 µm; or in the alternative, from 250 to 1500 µm; or in the alternative, from 500 to 1250 µm; or in the alternative, from 750 to 1000 µm.

The multilayer sheet may be formed via different methods. For example, each individual layers may be preformed, and then laminated together; or in the alternative, different layers may be co-extruded; or in another alternative, the sealant layer may be extrusion coated on a preformed core layer.

### Sealant Layer

The multilayer sheet comprises at least one sealant layer. The sealant layer comprises one or more antimicrobial agents, one or more base polymers, and optionally one or more secondary polymers. The sealant layer has a thickness in the range of from 5 to 500 µm; for example, from 5 to 450 µm; or in the alternative, from 5 to 400 µm; or in the alternative, from 5 to 350 µm; or in the alternative, from 5 to 300 µm; or in the alternative, from 5 to 200 µm; or in the alternative, from 5 to 100 µm; or in the alternative, from 30 to 100 µm. The sealant layer comprises approximately from 5 to 10 percent of the thickness of the multilayer sheet, based on the total thickness of the multilayer sheet.

The sealant layer comprises from 0.02 to less than 1 percent by weight of one or more antimicrobial agents; for example, from 0.02 to 0.7 weight percent; or in the alternative, from 0.02 to 0.6 weight percent; or in the alternative, from 0.02 to 0.5 weight percent. The antimicrobial agent may be any agent; for example, the antimicrobial agent may be an antibacterial agent, antifungal agent, antialgea agent, and combinations thereof. Such antimicrobial agents are commercially available under tradenames DOWICIDE A Antimicrobial (2-phenylphenol, CAS No. 90-43-7, C₁₂H₁₀O, 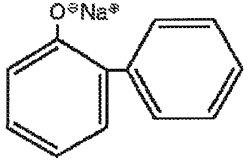 ), commercially available from The Dow Chemical Company, USA; or HeiQ AGS-20 (HeiQ AGS-20 powder is a microcomposite structure composed of silver particles supported throughout a matrix of amorphous silicon dioxide), commercially available from HeiQ Materials AG, Switzerland; or Biosafe MCX 117685 (Silane based antimicrobial agent, 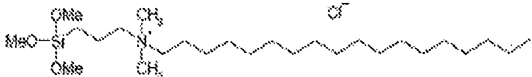 ), commercially available from RTP Co., USA.

The sealant layer further comprises at least 20 percent by weight of one or more base polymers, as described hereinbelow in further details; based on the total weight of the sealant layer; for example, the sealant layer may comprise from 20 to 80 percent by weight of one or more base polymers, based on the total weight of the sealant layer; or in the alternative, from 25 to 75 weight percent; or in the alternative, from 25 to 65 weight percent; or in the alternative from 30 to 55 weight percent.

The base polymer comprisesa propylene/alpha-olefin copolymer composition. The propylene/alpha-olefin copolymer composition is a propylene/ethylene copolymer composition. The propylene/alpha-olefin copolymer composition, as the base polymer, may optionally further comprise one or more polymers, e.g. a random copolymer polypropylene (RCP). In one particular embodiment, the propylene/alpha-olefin copolymer, as the base polymer, is characterized as having substantially isotactic propylene sequences. "Substantially isotactic propylene sequences" means that the sequences have an isotactic triad (mm) measured by ¹³C NMR of greater than 0.85; in the alternative, greater than 0.90; in another alternative, greater than 0.92; and in another alternative, greater than 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by ¹³C NMR spectra.

The propylene/alpha-olefin copolymer, as the base polymer, may have a melt flow rate in the range of from 0.1 to 500 g/10 minutes, measured in accordance with ASTM D-1238 (at 230° C / 2.16 Kg). All individual values and subranges from 0.1 to 500 g/10 minutes are included herein and disclosed herein; for example, the melt flow rate can be from a lower limit of 0.1 g/10 minutes, 0.2 g/10 minutes, or 0.5 g/10 minutes to an upper limit of 500 g/10 minutes, 200 g/10 minutes, 100g/10 minutes, or 25 g/10 minutes. For example, the propylene/alpha-olefin copolymer, as the base polymer, may have a melt flow rate in the range of 0.1 to 200 g/10 minutes; or in the alternative, the propylene/ alpha-olefin copolymer, as the base polymer, may have a melt flow rate in the range of 0.2 to 100 g/10 minutes; or in the alternative, the propylene/ alpha-olefin copolymer, as the base polymer, may have a melt flow rate in the range of 0.2 to 50 g/10 minutes; or in the alternative, the propylene/ alpha-olefin copolymer, as the base polymer, may have a melt flow rate in the range of 0.5 to 50 g/10 minutes; or in the alternative, the propylene/ alpha-olefin copolymer, as the base polymer, may have a melt flow rate in the range of 1 to 50 g/10 minutes; or in the alternative, the propylene/ alpha-olefin copolymer, as the base polymer, may have a melt flow rate in the range of 1 to 40 g/10 minutes; or in the alternative, the propylene/ alpha-olefin copolymer, as the base polymer, may have a melt flow rate in the range of 1 to 30 g/10 minutes; or in the alternative, the propylene/ alpha-olefin copolymer, as the base polymer, may have a melt flow rate in the range of 1 to 4 g/10 minutes.

The propylene/alpha-olefin copolymer, as the base polymer, has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer, as the base polymer, may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer, as the base polymer, may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer, as the base polymer, may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer, as the base polymer, may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method. The propylene/alpha-olefin copolymer, as the base polymer, comprises units derived from propylene and polymeric units derived from one or more alpha-olefin comonomers.

The propylene/alpha-olefin copolymer, as the base polymer, preferably comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer, as the base polymer, comprises from 1 to 35 percent by weight of one or more alpha-olefin comonomers; or in the alternative, the propylene/alpha-olefin copolymer, as the base polymer, comprises from 1 to 30 percent by weight of one or more alpha-olefin comonomers; or in the alternative, the propylene/alpha-olefin copolymer, as the base polymer, comprises from 3 to 27 percent by weight of one or more alpha-olefin comonomers; or in the alternative, the propylene/alpha-olefin copolymer, as the base polymer, comprises from 3 to 20 percent by weight of one or more alpha-olefin comonomers; or in the alternative, the propylene/alpha-olefin copolymer, as the base polymer, comprises from 3 to 15 percent by weight of one or more alpha-olefin comonomers.

The propylene/alpha-olefin copolymer, as the base polymer, may have a molecular weight distribution (MWD), defined as weight average molecular weight divided by number average molecular weight (M_{w}/Mₙ) of 3.5 or less; in the alternative 3.0 or less; or in another alternative from 1.8 to 3.0.

Such propylene/alpha-olefin copolymers, as the base polymer, are further described in details in the U.S. Patent Nos. 6,960,635 and 6,525,157. Such propylene/alpha-olefin copolymers, as the base polymer, are commercially available from The Dow Chemical Company, under the tradename VERSIFY™, or from ExxonMobil Chemical Company, under the tradename VISTAMAXX™.

In one embodiment, the propylene/alpha-olefin copolymers, as the base polymer, are further characterized as comprising (A) between 60 and less than 100, preferably between 80 and 99 and more preferably between 85 and 99, weight percent units derived from propylene, and (B) Between greater than zero and 40, preferably between 1 and 20, more preferably between 4 and 16 and even more preferably between 4 and 15, weight percent units derived from ethylene; and containing an average of at least 0.001, preferably an average of at least 0.005 and more preferably an average of at least 0.01, long chain branches/1000 total carbons. The maximum number of long chain branches in the propylene/alpha-olefin copolymer is not critical, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. Such propylene/alpha-olefin copolymers, as the base polymer, are further described in details in the U.S. Provisional Patent Application No. 60/988,999 and International Paten Application No. PCT/US08/082599.

The base polymer may further comprise one or more additives. Such additives include, but are not limited to, nucleating agents, optical brighteners, slip agents, anti-slip agents, antistatic agents, color enhancers, dyes, lubricants, fillers, pigments, primary antioxidants, secondary antioxidants, processing aids, UV stabilizers, and combinations thereof. The base polymer may contain any amounts of additives. The base polymer may comprise from 0 to 10 percent by the combined weight of such additives, based on the weight of the base polymer including such additives. All individual values and subranges from 0 to 10 weight percent are included herein and disclosed herein; for example, the base polymer may comprise from 0 to 7 percent by the combined weight of additives, based on the weight of the base polymer including such additives; in the alternative, the base polymer may comprise from 0 to 5 percent by the combined weight of additives, based on the weight of the base polymer including such additives; or in the alternative, the base polymer may comprise from 0 to 3 percent by the combined weight of additives, based on the weight of the base polymer including such additives; or in the alternative, the base polymer may comprise from 0 to 2 percent by the combined weight of additives, based on the weight of the base polymer including such additives; or in the alternative, the base polymer may comprise from 0 to 1 percent by the combined weight of additives, based on the weight of the base polymer including such additives; or in the alternative, the base polymer may comprise from 0 to 0.5 percent by the combined weight of additives, based on the weight of the base polymer including such additives. Antioxidants, such as Irgafos™ 168 and Irganox™ 1010, may be used to protect against thermal and/or oxidative degradation. Irganox™ 1010 is tetrakis (methylene (3,5-di-tert-butyl-4hydroxyhydrocinnamate) available from Ciba Geigy Inc. Irgafos™ 168 is tris (2,4 di-tert-butylphenyl) phosphite available from Ciba Geigy Inc.

The sealant layer further comprises from 10 to less than 80 percent by weight of one or more secondary polymers, as described hereinbelow; based on the total weight of the sealant layer; for example, the sealant layer may comprise from 20 to 80 percent by weight of one or more secondary polymers, based on the total weight of the sealant layer; or in the alternative from 30 to 80 weight percent; or in the alternative from 20 to 75 weight percent; or in the alternative from 30 to 65 weight percent. The secondary polymer comprises one or more propylene polymers selected from the group consisting of polypropylene homopolymer, polypropylene random copolymer, impact modified polypropylene, and combinations thereof. The secondary polymer may have any melt flow rate (MFR); for example, the secondary polymer may have a melt flow rate in the range of from less than 10 g/10 minutes; for example, from 0.5 to 8 g/10 minutes; or in the alternative, from 0.5 to 7 g/10 minutes; or in the alternative, from 0.5 to 5 g/10 minutes; or in the alternative, from 0.5 to 4 g/10 minutes; or in the alternative, from 1 or 5 g/10 minutes; or in the alternative, from 1 to 4 g/10 minutes, measured according to ISO 1133 at 230° C and 2.16 kg. Such secondary polymers are commercially available under the tradenames INSPIRE™ 147 (propylene homopolymer having an MFR of approximately 3.2 g/10 minutes), available from The Dow Chemical Company, USA; DOW H105-03NA Polypropylene (polypropylene homopolymer having a MFR of approximately 3.2 g/10 minutes), available from The Dow Chemical Company.

The secondary polymer may further comprise one or more additives. Such additives include, but are not limited to, nucleating agents, optical brighteners, slip agents, anti-slip agents, antistatic agents, color enhancers, dyes, lubricants, fillers, pigments, primary antioxidants, secondary antioxidants, processing aids, UV stabilizers, and combinations thereof. The secondary polymer may contain any amounts of additives. The secondary polymer may comprise from 0 to 10 percent by the combined weight of such additives, based on the weight of the secondary polymer including such additives. All individual values and subranges from 0 to 10 weight percent are included herein and disclosed herein; for example, the secondary polymer may comprise from 0 to 7 percent by the combined weight of additives, based on the weight of the secondary polymer including such additives; in the alternative, the secondary polymer may comprise from 0 to 5 percent by the combined weight of additives, based on the weight of the secondary polymer including such additives; or in the alternative, the secondary polymer may comprise from 0 to 3 percent by the combined weight of additives, based on the weight of the secondary polymer including such additives; or in the alternative, the secondary polymer may comprise from 0 to 2 percent by the combined weight of additives, based on the weight of the secondary polymer including such additives; or in the alternative, the secondary polymer may comprise from 0 to 1 percent by the combined weight of additives, based on the weight of the secondary polymer including such additives; or in the alternative, the secondary polymer may comprise from 0 to 0.5 percent by the combined weight of additives, based on the weight of the secondary polymer including such additives. Antioxidants, such as Irgafos™ 168 and Irganox™ 1010, may be used to protect against thermal and/or oxidative degradation. Irganox™ 1010 is tetrakis (methylene (3,5-di-tert-butyl-4hydroxyhydrocinnamate) available from Ciba Geigy Inc. Irgafos™ 168 is tris (2,4 di-tert-butylphenyl) phosphite available from Ciba Geigy Inc.

The one or more base polymers, one or more antimicrobial agents, and one or more secondary polymers may optionally be pre-compounded to form pellets for further processing downstream into a sealant layer. In the alternative, the one or more base polymers, one or more antimicrobial agents, and one or more secondary polymers may be compounded, and immediately processed into a sealant layer. Any process may be employed to form a sealant layer; for example, such processes include, but are not limited to, sheet extrusion. In sheet extrusion process, for example, one or more polymers and additives are molten in one or more extruders, e.g. single screw extruder or twin screw extruder, and then, the molten polymer streams are combined in a feedblock to form a multilayer sheet which is cast through a flat die onto a collector, transported forward over rolls, and subsequently is cut into individual sheets of various dimensions.

### Core Layer

The multilayer sheet comprises at least one core layer in contact with the at least one sealant layer. The core layer has a thickness in the range of from 100 to 4500 µm; for example, from 100 to 4000 µm; or in the alternative, from 100 to 3500 µm; or in the alternative, from 100 to 3000 µm; or in the alternative, from 250 to 1500 µm; or in the alternative, from 500 to 1250 µm; or in the alternative, from 750 to 1000 µm. The core layer comprises approximately from 50 to 95 percent of the thickness of the multilayer sheet, based on the total thickness of the multilayer sheet. The core layer comprises one or more core polymers selected from the group consisting of polypropylene homopolymer, polypropylene random copolymer, impact modified polypropylene, and combinations thereof. The core polymer may have any melt flow rate (MFR); for example, the core polymer may have a melt flow rate in the range of from less than 10 g/10 minutes; for example, from 0.5 to 8 g/10 minutes; or in the alternative, from 0.5 to 7 g/10 minutes; or in the alternative, from 0.5 to 5 g/10 minutes; or in the alternative, from 0.5 to 4 g/10 minutes; or in the alternative, from 1 or 5 g/10 minutes; or in the alternative, from 1 to 4 g/10 minutes, measured according to ISO 1133 at 230° C and 2.16 kg. the core polymer may have a flex modulus in the range of from 800 to 2400 MPa; for example, from 1000 to 2000 MPa, according to test method ASTM-D 790A. Such core polymers are commercially available under the tradenames INSPIRE™ 147 (propylene homopolymer having an MFR of approximately 3.2 g/10 minutes), available from The Dow Chemical Company, USA; DOW H105-03NA Polypropylene (polypropylene homopolymer having a MFR of approximately 3.2 g/10 minutes), available from The Dow Chemical Company.

The core polymer may further comprise one or more additives. Such additives include, but are not limited to, nucleating agents, optical brighteners, slip agents, anti-slip agents, antistatic agents, color enhancers, dyes, lubricants, fillers, pigments, primary antioxidants, secondary antioxidants, processing aids, UV stabilizers, and combinations thereof. The secondary polymer may contain any amounts of additives. The core polymer may comprise from 0 to 10 percent by the combined weight of such additives, based on the weight of the core polymer including such additives. All individual values and subranges from 0 to 10 weight percent are included herein and disclosed herein; for example, the core polymer may comprise from 0 to 7 percent by the combined weight of additives, based on the weight of the core polymer including such additives; in the alternative, the core polymer may comprise from 0 to 5 percent by the combined weight of additives, based on the weight of the core polymer including such additives; or in the alternative, the core polymer may comprise from 0 to 3 percent by the combined weight of additives, based on the weight of the core polymer including such additives; or in the alternative, the core polymer may comprise from 0 to 2 percent by the combined weight of additives, based on the weight of the core polymer including such additives; or in the alternative, the core polymer may comprise from 0 to 1 percent by the combined weight of additives, based on the weight of the core polymer including such additives; or in the alternative, the core polymer may comprise from 0 to 0.5 percent by the combined weight of additives, based on the weight of the core polymer including such additives. Antioxidants, such as Irgafos™ 168 and Irganox™ 1010, may be used to protect against thermal and/or oxidative degradation. Irganox™ 1010 is tetrakis (methylene (3,5-di-tert-butyl-4hydroxyhydrocinnamate) available from Ciba Geigy Inc. Irgafos™ 168 is tris (2,4 di-tert-butylphenyl) phosphite available from Ciba Geigy Inc.

In one embodiment, the one or more core polymers, in the form of pellets, may be formed into a core layer. Any process may be employed to form a core layer; for example, such processes include, but are not limited to, sheet extrusion. In sheet extrusion process, for example, one or more polymers and additives are molten in one or more extruders, e.g. single screw extruder or twin screw extruder, and then, the molten polymer streams are combined in a feedblock to form a multilayer sheet which is cast through a flat die onto a collector, transported forward over rolls, and subsequently is cut into individual sheets of various dimensions.

### Regrind Layer

The multilayer sheet may further comprise one or more regrind layers. The regrind layer optionally comprises approximately from 5 to 60 percent of the thickness of the multilayer sheet, based on the total thickness of the multilayer sheet. The regrind layer comprises a regrind material. The regrind material may comprise any unused portion of the sealant layer and/or the core layer, and/or process trim offs from the thermoforming steps of the multilayer sheet, as described herein, and combinations thereof.

In one embodiment, the one or more regrind materials may be formed into a regrind layer. Any process may be employed to form a regrind layer; for example, such processes include, but are not limited to, sheet extrusion. In sheet extrusion process, for example, one or more polymers and additives are molten in one or more extruders, e.g. single screw extruder or twin screw extruder, and then, the molten polymer streams are combined in a feedblock to form a multilayer sheet which is cast through a flat die onto a collector, transported forward over rolls, and subsequently is cut into individual sheets of various dimensions.

### Functional Layer

The multilayer sheet may further comprise one or more functional layers such as one or more barrier layers. Functional layer has a thickness in the range of from 0.5 to 10 µm. Functional layer comprises approximately from 5 to 15 percent, for example, 5 to 10 percent, of the thickness of the multilayer sheet, based on the total thickness of the multilayer sheet. The functional layer comprises a polymeric composition selected from the group consisting of PVDC, PCTFE, PE, PP, EVOH, PVOH, and combinations thereof. Functional layers comprising PVDC are particularly suitable for providing a barrier to both gas and water vapor. Functional layers comprising a polymeric composition selected from the group EVOH, PVOH, and combinations thereof are particularly suitable for providing a barrier to gas. Functional layers comprising PCTFE, PE, PP, and combinations thereof are particularly suitable for providing a barrier to water vapor. The functional layer may be formed via any method; for example, functional layer may be formed via sheet extrusion. In sheet extrusion process, for example, one or more polymers and additives are molten in one or more extruders, e.g. single screw extruder or twin screw extruder, and then, the molten polymer streams are combined in a feedblock to form a multilayer sheet which is cast through a flat die onto a collector, transported forward over rolls, and subsequently is cut into individual sheets of various dimensions.

### Tie Layer

The multilayer sheet may further comprise one or more tie layers. The tie layer has a thickness in the range of from 0.5 to 10 µm. The tie layer comprises approximately from 1 to 10 percent, for example 1 to5 percent, of the thickness of the multilayer sheet, based on the total thickness of the multilayer sheet. The tie layer comprises a polymeric composition selected from the group consisting of Maleic anhydride grafted polyethylene such as those available from The Dow Chemical Company under the trade name AMPLIFY or TYMOR. The tie layer may be formed via any method; for example, the tie layer may be formed via any method selected from the group consisting of extrusion process sheet extrusion. In sheet extrusion process, for example, one or more polymers and additives are molten in one or more extruders, e.g. single screw extruder or twin screw extruder, and then, the molten polymer streams are combined in a feedblock to form a multilayer sheet which is cast through a flat die onto a collector, transported forward over rolls, and subsequently is cut into individual sheets of various dimensions.

### Articles

The multilayer sheets of the present invention may be formed into various articles via methods generally known to a person of ordinary skill in the art such as thermoforming process or extrusion blow molding process. The thermoformed article may further comprise a cap layer. In one embodiment, the cap layer comprises a polyolefin selected from the group consisting of polyethylene, polypropylene, and combinations thereof. In another embodiment, the cap layer comprises a coated aluminum foil. The cap layer may further comprise an antimicrobial agent, as described hereinabove. The thermoformed article may be used as a food container, e.g. chilled food container or frozen food container, a medicine container, a fruit container, and the like. The cap layer is in contact with the sealant layer as described hereinabove. Preferably, a seal is formed between the cap and the sealant layer. The seal may be formed via heat seal. In the alternative, the cap layer may be a cling film facilitating the seal between the sealant layer and the cap layer. The thermoformed articles according to the present invention provides improved antimicrobial effects on the goods contained therein, and further provides improved sealing properties therebetween the sealant layer and the cap layer.

### Examples

The following examples illustrate the present invention but are not intended to limit the scope of the invention. The examples of the instant invention demonstrate that improves sealing properties while providing antimicrobial agents contained in their structure in accordance with the present invention.

### Comparative Example 1

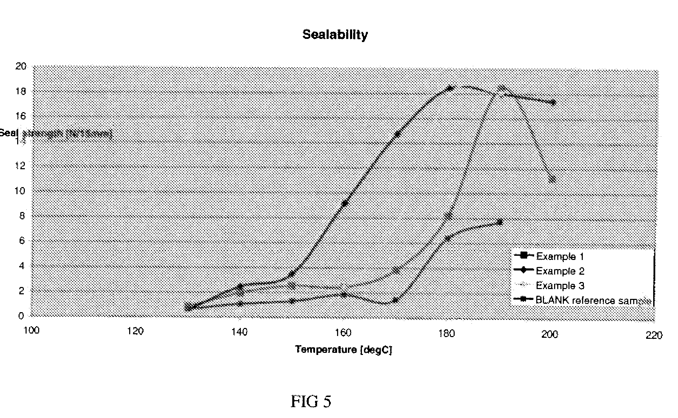

Comparative Example 1 is a thermoformed article comprising a monolayer sheet having a thickness in the range of approximately 1000 µm, wherein monolayer sheet comprised 100% by weight of a polypropylene homopolymer, available under the tradename DOW H105-03 NA, commercially available from The Dow Chemical Company, USA, having a melt flow rate of approximately 3.2 g/10 minutes, measured in accordance with ISO 1133 under 203° C and 2.16 kg. The samples were prepared under the following processing conditions: melt temperature of approximately 252°C, melt pressure of approximately 8.3 MPa (83 bar) total output of approximately 28 kg per hour, and a die gap of approximately 1.5 mm. The equipment was a single screw extruder. The monolayer sheet was formed into a thermoformed article using a thermoformer, with cups having a draw ratio of 1.1, under the conditions as shown in Tables 1A and 1B. The sealability of Comparative Example 1 was measured against a cap layer comprising a film. The film comprised a polyethylene composition, the available under the tradename DOWLEX 2045S, from The Dow Chemical Company, USA, having a density of approximately 0.920 g/cm³ and a melt index I₂ in the range of approximately 1 g /10 minutes, measured according to ISO 1133 under 190°C and 2.162 g. The cap layer had a thickness of approximately 50 µm, and the samples were sealed for a one second period at 500N. The sealing strength measured in N/15mm as a function of sealing temperature measured in degrees Celsius was determined, and the results are shown in Figure 5.

### Inventive Example 1

Inventive Example 1 was a thermoformed article comprising a multilayer sheet having a thickness of approximately 1000 µm. The multilayer sheet comprised a sealant layer and a core layer.

The sealant layer comprised (a) 39.925 percent by weight of a propylene ethylene copolymer, available under the tradename VERSIFY 3200 from The Dow Chemical Company, having a melt flow rate of approximately 8 g/10 minutes, measured in accordance with ISO 1133 under 203° C and 2.16 kg, crystallinity of approximately 30 percent; (b) 0.075 percent by weight of a antimicrobial agent, available under the tradename DOWICIDE A Antimicrobial from The Dow Chemical Company, USA; and (c) 60 percent by weight of a polypropylene homopolymer, available under the tradename DOW H105-03 NA, commercially available from The Dow Chemical Company, USA, having a melt flow rate of approximately 3.2 g/10 minutes, measured in accordance with ISO 1133 under 203° C and 2.16 kg. The sealant layer had a thickness of approximately 75 µm.

The core layer comprised 100 percent by weight of a polypropylene homopolymer, available under the tradename DOW H105-03 NA, commercially available from The Dow Chemical Company, USA, having a melt flow rate of approximately 3.2 g/10 minutes, measured in accordance with ISO 1133 under 203° C and 2.16 kg. The core layer had a thickness of approximately 925 µm.

The samples were prepared under the following processing conditions: melt temperature of sealant layer was approximately 233°C, melt pressure of the sealant layer was approximately 5.1 MPa (51 bar) melt temperature of core layer was approximately 252 °C, melt pressure of the core layer was approximately 8.3 MPa (83 bar), total output of approximately 28 kg per hour, and a die gap of approximately 1.5 mm. The equipment was a single screw extruder. The multilayer sheet was formed into a thermoformed article using a thermoformer, with cups having a draw ratio of 1.1, under the conditions as shown in Tables 1A and 1B. The sealability of Inventive Example 1 was measured against a cap layer comprising a film. The film comprised a polyethylene composition, the available under the tradename DOWLEX 2045S, from The Dow Chemical Company, USA, having a density of approximately 0.920 g/cm³ and a melt index I₂ in the range of approximately 1 g/10 minutes, measured according to ISO 1133 under 190°C and 2.162 g. The cap layer had a thickness of approximately 50 µm, and the samples were sealed for a one second period at 500N. The sealing strength measured in N/15mm as a function of sealing temperature measured in degrees Celsius was determined, and the results are shown in Figure 5.

### Inventive Example 2

Inventive Example 2 was a thermoformed article comprising a multilayer sheet having a thickness of approximately 1000 µm. The multilayer sheet comprised a sealant layer and a core layer.

The sealant layer comprised (a) 69.925 percent by weight of a propylene ethylene copolymer, available under the tradename VERSIFY 3200 from The Dow Chemical Company, having a melt flow rate of approximately 8 g/10 minutes, measured in accordance with ISO 1133 under 203° C and 2.16 kg, crystallinity of approximately 30 percent; (b) 0.075 percent by weight of a antimicrobial agent, available under the tradename DOWICIDE A Antimicrobial from The Dow Chemical Company, USA; and (c) 30 percent by weight of polypropylene homopolymer, available under the tradename INSPIRE from The Dow Chemical Company, having a melt flow rate of melt flow rate of approximately 3.2 g/10 minutes, measured in accordance with ISO 1133 under 203° C and 2.16 kg. The sealant layer had a thickness of approximately 75 µm.

The core layer comprised 100 percent by weight of a polypropylene homopolymer, available under the tradename INSPIRE from The Dow Chemical Company, having a melt flow rate of melt flow rate of approximately 3.2 g/10 minutes, measured in accordance with ISO 1133 under 203° C and 2.16 kg. The core layer had a thickness of approximately 925 µm.

The samples were prepared under the following processing conditions: melt temperature of sealant layer was approximately 233°C, melt pressure of the sealant layer was approximately 5.1 MPa (51 bar) melt temperature of core layer was approximately 255 °C, melt pressure of the core layer was approximately 8.0 MPa (80 bar) total output of approximately 28 kg per hour, and a die gap of approximately 1.5 mm. The equipment was a single screw extruder. The multilayer sheet was formed into a thermoformed article using a thermoformer, with cups having a draw ratio of 1.1, under the conditions as shown in Tables 1A and 1B. The sealability of Inventive Example 2 was measured against a cap layer comprising a film. The film comprised a polyethylene composition, the available under the tradename DOWLEX 2045S, from The Dow Chemical Company, USA, having a density of approximately 0.920 g/cm³ and a melt index I₂ in the range of approximately 1 g /10 minutes, measured according to ISO 1133 under 190°C and 2.162 g. The cap layer had a thickness of approximately 50 µm, and the samples were sealed for a one second period at 500N. The sealing strength measured in N/15mm as a function of sealing temperature measured in degrees Celsius was determined, and the results are shown in Figure 5.

**Inventive Example 3** (having an amount of antimicrobial agent higher than according to the claimed invention)

Inventive Example 3 was a thermoformed article comprising a multilayer sheet having a thickness of approximately 1000 µm. The multilayer sheet comprised a sealant layer and a core layer.

The sealant layer comprised (a) 35 percent by weight of a propylene ethylene copolymer, available under the tradename VERSIFY 3200 from The Dow Chemical Company, having a melt flow rate of approximately 8 g/10 minutes, measured in accordance with ISO 1133 under 203° C and 2.16 kg, crystallinity of approximately 30 percent; (b) 5 percent by weight of a antimicrobial agent, available under the tradename Biosafe MCX 117683 from RTP Company; and (c) 60 percent by weight of a polypropylene homopolymer, available under the tradename DOW H105-03 NA, commercially available from The Dow Chemical Company, USA, having a melt flow rate of approximately 3.2 g/10 minutes, measured in accordance with ISO 1133 under 203° C and 2.16 kg. The sealant layer had a thickness of approximately 75 µm.

The core layer comprised 100 percent by weight of a polypropylene homopolymer, available under the tradename DOW H105-03 NA, commercially available from The Dow Chemical Company, USA, having a melt flow rate of approximately 3.2 g/10 minutes, measured in accordance with ISO 1133 under 203° C and 2.16 kg. The core layer had a thickness of approximately 925 µm.

The samples were prepared under the following processing conditions: melt temperature of sealant layer was approximately 233°C, melt pressure of the sealant layer was approximately 5.1 MPa (51bar) melt temperature of core layer was approximately 252 °C, melt pressure of the core layer was aproximately 8.3 MPa (83 bar), total output of approximately 28 kg per hour, and a die gap of approximately 1.5 mm. The equipment was a single screw extruder. The multilayer sheet was formed into a thermoformed article using a thermoformer, with cups having a draw ratio of 1.1, under the conditions as shown in Tables 1A and 1B. The sealability of Inventive Example 1 was measured against a cap layer comprising a film. The film comprised a polyethylene composition, the available under the tradename DOWLEX 2045S, from The Dow Chemical Company, USA, having a density of approximately 0.920 g/cm³ and a melt index I₂ in the range of approximately 1 g /10 minutes, measured according to ISO 1133 under 190°C and 2.162 g. The cap layer had a thickness of approximately 50 µm, and the samples were sealed for a one second period at 500N. The sealing strength measured in N/15mm as a function of sealing temperature measured in degrees Celsius was determined, and the results are shown in Figure 5.

### Test Methods

Test methods include the following:
The sealability was measured according to ASTM F88-99 and/or ASTM F2029-00.

The effectiveness of the antimicrobial agents was measured according to Japanese Industrial Standard JIS L 1902.

**Table 1A**

| | | | | | plug returning | hold before | Constant speed |
|---|---|---|---|---|---|---|---|
| Sample | Draw ratio | Travel Time | Speed | Distance | Speed | Returning | S-curve In Between |
| | | sec | mm/sec | mm | mm/sec | msec | |
| Comparative 1 | 1.1 | 400 | 400 | 80.3 | 125 | 0 | Constant speed |
| Inventive 1 | 1.1 | 400 | 400 | 80.3 | 125 | 0 | Constant speed |
| Inventive 2 | 1.1 | 400 | 400 | 80.3 | 125 | 0 | Constant speed |
| Inventive 3 | 1.1 | 400 | 400 | 80.3 | 125 | 0 | Constant speed |

**Table 1B**

| Pneumatic | | | Temperature | | | | |
|---|---|---|---|---|---|---|---|
| | Open | Close | Pressure | Pressure | | | |
| Sample | Blow Valve | Blow Valve | | Deviation | Heating Time | Preheating | Chamber |
| | Msec | msec | MPa (bar) | MPa (bar) | sec | °C | °C |
| | | | | | | | |
| Comparative 1 | 380 | 1100 | 0.4 (4.0) | 0.02 (0.2) | 30 | 148 | 27 |
| Inventive 1 | 380 | 1100 | 0.4 (4.0) | 0.02 (0.2) | 30 | 148 | 27 |
| Inventive 2 | 380 | 1100 | 0.4 (4.0) | 0.02 (0.2) | 30 | 148 | 27 |
| Inventive 3 | 380 | 1100 | 0.4 (4.0) | 0.2 (0.2) | 30 | 148 | 27 |

## Claims

1. A multilayer sheet comprising;
at least one sealant layer comprising;
from 0.02 to less than 1 percent by weight of one or more antimicrobial agents, based on the total weight of the sealant layer;
at least 20 percent by weight of a base polymer, based on the total weight of the sealant layer, wherein said base polymer comprises a propylene/ethylene copolymer composition, wherein said propylene/ethylene copolymer has a crystallinity in the range of from 1 percent by weight to 30 percent by weight as measured by DSC, i.e. a heat of fusion in the range of from 2 Joules/gram to 50 Joules/gram,
and a DSC melting point in
the range of 25°C to 110°C;
from 10 to less than 80 percent by weight of a secondary polymer selected from the group consisting of polypropylene homopolymer, polypropylene random copolymer, impact modified polypropylene and combinations thereof;
at least one core layer in contact with said at least one sealant layer, wherein said core layer comprises
a core polymer selected from the group consisting of polypropylene homopolymer, polypropylene random copolymer, impact modified polypropylene, and combinations thereof.

2. The multilayer sheet according to claim 1, wherein said multilayer sheet is a coextruded sheet or laminated sheet.

3. The multilayer sheet according to any one of the preceding claims, wherein said multilayer sheet has a thickness in the range 100 to 5000 µm.

4. The multilayer sheet according to any one of the preceding claims, wherein said sealant layer comprises 5 to 10 percent of the thickness of the multilayer sheet.

5. The multilayer sheet according to any one of the preceding claims, wherein said sealant layer comprises from 200 to 500 ppm by weight of one or more antimicrobial agents. 6383607

6. The multilayer sheet according to any one of the preceding claims, wherein any layer further comprises one or more nucleating agents, one or more antistatic agents, one or more antioxidants.

7. The multilayer sheet according to any one of the preceding claims, wherein the core layer further comprises a foam layer.

8. The multilayer sheet according to any one of the preceding claims, wherein said multilayer sheet further comprises one or more regrind layers, one or more functional layers, or one or more tie layers, wherein said regrind layer comprises a regrind material, said functional layer comprises a polymeric composition selected from the group consisting of PVDC, PCTFE, PE, PP, EVOH, PVOH, and combinations thereof, and said tie layers comprise a polymeric composition selected from the group consisting of maleic anhydride grafted polyethylene, and combinations thereof.

9. The multilayer sheet according to any one of the preceding claims wherein the antimicrobial agent is an organic based antimicrobial agent or an inorganic based antimicrobial agent selected from the group consisting of a silver based antimicrobial agent and an organosilane having a quaternary ammonium active group based antimicrobial agent.

10. The multilayer sheet according to any one of the preceding claims wherein the antimicrobial agent is selected from the group consisting of 2-phenylphenol based antimicrobial agent, an antimicrobial agent based on a microcomposite structure composed of silver particles supported throughout a matrix of amorphous silicon dioxide, and a silane based antimicrobial agent.

11. A thermoformed article comprising the multilayer sheet according to any one of the preceding claims.

12. The thermoformed article according to Claim 11, wherein said thermoformed article further comprises a cap layer comprising a film, wherein said cap layer is at least partially in contact with said sealant layer.

13. The thermoformed article according to Claim 12, wherein said film comprises a polyolefin selected from the group consisting of polyethylene, polypropylene, and combinations thereof.

14. The thermoformed article according to Claim 12, wherein said film comprises one or more layers.

15. A process for forming a thermoformed article comprising the steps of:
selecting a multilayer sheet according to any one of claims 1 to 10; and
forming said multilayer sheet into an article via thermoforming process.

## Patentansprüche

1. Eine Mehrschichtfolie, die Folgendes beinhaltet:
mindestens eine Abdichtungsschicht, die Folgendes beinhaltet:
von 0,02 bis weniger als 1 Gewichtsprozent, bezogen auf das Gesamtgewicht der Abdichtungsschicht, einen oder mehrere antimikrobielle Wirkstoffe;
mindestens 20 Gewichtsprozent, bezogen auf das Gesamtgewicht der Abdichtungsschicht, ein Basispolymer, wobei das Basispolymer eine Propylen/Ethylen-Copolymerzusammensetzung beinhaltet, wobei das Propylen/Ethylen-Copolymer eine Kristallinität in dem Bereich von von 1 Gewichtsprozent bis 30 Gewichtsprozent, wie gemessen durch DSC, d. h. eine Schmelzwärme in dem Bereich von von 2 Joule/Gramm bis 50 Joule/Gramm und einen DSC-Schmelzpunkt in dem Bereich von 25 °C bis 110 °C aufweist;
von 10 bis weniger als 80 Gewichtsprozent eines sekundären Polymers, ausgewählt aus der Gruppe, bestehend aus Polypropylen-Homopolymer, statistischem Polypropylen-Copolymer, schlagmodifiziertem Polypropylen und Kombinationen davon; mindestens eine Kernschicht in Kontakt mit der mindestens einen Abdichtungsschicht,
wobei die Kernschicht Folgendes beinhaltet:
ein Kernpolymer, ausgewählt aus der Gruppe, die aus Polypropylen-Homopolymer, statistischem Polypropylen-Copolymer, schlagmodifiziertem Polypropylen und
Kombinationen davon besteht.

2. Mehrschichtfolie gemäß Anspruch 1, wobei die Mehrschichtfolie eine coextrudierte Folie oder eine laminierte Folie ist.

3. Mehrschichtfolie gemäß einem der vorhergehenden Ansprüche, wobei die Mehrschichtfolie eine Dicke in dem Bereich von von 100 bis 5000 µm aufweist.

4. Mehrschichtfolie gemäß einem der vorhergehenden Ansprüche, wobei die Abdichtungsschicht 5 bis 10 Prozent der Dicke der Mehrschichtfolie beinhaltet.

5. Mehrschichtfolie gemäß einem der vorhergehenden Ansprüche, wobei die Abdichtungsschicht von 200 bis 500 ppm nach Gewicht von einem oder mehreren antimikrobiellen Wirkstoffen beinhaltet.

6. Mehrschichtfolie gemäß einem der vorhergehenden Ansprüche, wobei eine beliebige Schicht ferner ein oder mehrere Keimbildner, ein oder mehrere antistatische Wirkstoffe, ein oder mehrere Antioxidationsmittel beinhaltet.

7. Mehrschichtfolie gemäß einem der vorhergehenden Ansprüche, wobei die Kernschicht ferner eine Schaumstoffschicht beinhaltet.

8. Mehrschichtfolie gemäß einem der vorhergehenden Ansprüche, wobei die Mehrschichtfolie ferner eine oder mehrere Regranulatschichten, eine oder mehrere Funktionsschichten oder eine oder mehrere Haftvermittlerschichten beinhaltet, wobei die Regranulatschicht ein Regranulatmaterial beinhaltet, die Funktionsschicht eine Polymerzusammensetzung, ausgewählt aus der Gruppe, bestehend aus PVDC, PCTFE, PE, PP, EVOH, PVOH und Kombinationen davon beinhaltet und die Haftvermittlerschichten eine Polymerzusammensetzung, ausgewählt aus der Gruppe, bestehend aus gepfropften Maleinsäureanhydridpolyethylen und Kombinationen davon, beinhalten.

9. Mehrschichtfolie gemäß einem der vorhergehenden Ansprüche, wobei der antimikrobielle Wirkstoff ein antimikrobieller Wirkstoff auf organischer Basis oder ein antimikrobieller Wirkstoff auf anorganischer Basis, ausgewählt aus der Gruppe, bestehend aus einem silberbasierten antimikrobiellen Wirkstoff und einem Organosilan mit einem antimikrobiellem Wirkstoff auf Basis einer aktiven quatären Ammoniumgruppe, ist.

10. Mehrschichtfolie gemäß einem der vorhergehenden Ansprüche, wobei der antimikrobielle Wirkstoff aus der Gruppe ausgewählt ist, die aus antimikrobiellem Wirkstoff auf 2-Phenylphenolbasis, einem antimikrobiellen Wirkstoff auf Basis einer aus durch eine Matrix amorphen Siliciumdioxids hindurch gehaltenen Silberpartikeln zusammengesetzten Mikroverbundkonstruktion und einem silanbasierten antimikrobiellem Wirkstoff besteht.

11. Ein thermogeformter Artikel, der die Mehrschichtfolie gemäß einem der vorhergehenden Ansprüche beinhaltet.

12. Thermogeformter Artikel gemäß Anspruch 11, wobei der thermogeformte Artikel ferner eine Deckschicht beinhaltet, die einen Film beinhaltet, wobei sich die Deckschicht zumindest teilweise in Kontakt mit der Abdichtungsschicht befindet.

13. Thermogeformter Artikel gemäß Anspruch 12, wobei der Film ein Polyolefin beinhaltet, das aus der Gruppe ausgewählt ist, die aus Polyethylen, Polypropylen und Kombinationen davon besteht.

14. Thermogeformter Artikel gemäß Anspruch 12, wobei der Film eine oder mehrere Schichten beinhaltet.

15. Ein Verfahren zum Bilden eines thermogeformten Artikels, das die folgenden Schritte beinhaltet:
Auswählen einer Mehrschichtfolie gemäß einem der Ansprüche 1 bis 10; und
Formen der Mehrschichtfolie in einen Artikel über ein Thermoformverfahren.

## Revendications

1. Une feuille multicouche comprenant :
au moins une couche de matériau de scellage comprenant :
de 0,02 à moins de 1 pour cent en poids d'un ou de plusieurs agents antimicrobiens, rapporté au poids total de la couche de matériau de scellage ;
au moins 20 pour cent en poids d'un polymère de base, rapporté au poids total de la couche de matériau de scellage, où ledit polymère de base comprend une composition de copolymère propylène/éthylène, où ledit copolymère propylène/éthylène a une cristallinité comprise dans l'intervalle allant de 1 pour cent en poids à 30 pour cent en poids telle que mesurée par DSC, c.-à-d. une chaleur de fusion comprise dans l'intervalle allant de 2 Joules/gramme à 50 Joules/gramme, et un point de fusion DSC compris dans l'intervalle de 25 °C à 110 °C ;
de 10 à moins de 80 pour cent en poids d'un polymère secondaire sélectionné dans le groupe constitué d'homopolymère de polypropylène, de copolymère statistique de polypropylène, de polypropylène modifié choc et de combinaisons de ceux-ci ;
au moins une couche de coeur en contact avec ladite au moins une couche de matériau de scellage, où ladite couche de coeur comprend un polymère de coeur sélectionné dans le groupe constitué d'homopolymère de polypropylène, de copolymère statistique de polypropylène, de polypropylène modifié choc et de combinaisons de ceux-ci.

2. La feuille multicouche selon la revendication 1, où ladite feuille multicouche est une feuille coextrudée ou une feuille stratifiée.

3. La feuille multicouche selon l'une quelconque des revendications précédentes, où ladite feuille multicouche a une épaisseur comprise dans l'intervalle de 100 à 5 000 µm.

4. La feuille multicouche selon l'une quelconque des revendications précédentes, où ladite couche de matériau de scellage compose de 5 à 10 pour cent de l'épaisseur de la feuille multicouche.

5. La feuille multicouche selon l'une quelconque des revendications précédentes, où ladite couche de matériau de scellage comprend de 200 à 500 ppm en poids d'un ou de plusieurs agents antimicrobiens.

6. La feuille multicouche selon l'une quelconque des revendications précédentes, où n'importe quelle couche comprend en sus un ou plusieurs agents nucléants, un ou plusieurs agents antistatiques, un ou plusieurs antioxydants.

7. La feuille multicouche selon l'une quelconque des revendications précédentes, où la couche de coeur comprend en sus une couche de mousse.

8. La feuille multicouche selon l'une quelconque des revendications précédentes, où ladite feuille multicouche comprend en sus une ou plusieurs couches de matière rebroyée, une ou plusieurs couches fonctionnelles, ou une ou plusieurs couches de liaison, où ladite couche de matière rebroyée comprend une matière rebroyée, ladite couche fonctionnelle comprend une composition polymérique sélectionnée dans le groupe constitué de PVDC, PCTFE, PE, PP, EVOH, PVOH et de combinaisons de ceux-ci, et lesdites couches de liaison comprennent une composition polymérique sélectionnée dans le groupe constitué de polyéthylène greffé anhydride maléique et de combinaisons de celui-ci.

9. La feuille multicouche selon l'une quelconque des revendications précédentes où l'agent antimicrobien est un agent antimicrobien à base organique ou un agent antimicrobien à base inorganique sélectionné dans le groupe constitué d'un agent antimicrobien à base d'argent et d'un agent antimicrobien à base d'organosilane ayant un groupe actif ammonium quaternaire.

10. La feuille multicouche selon l'une quelconque des revendications précédentes où l'agent antimicrobien est sélectionné dans le groupe constitué d'agent antimicrobien à base de 2-phénylphénol, d'un agent antimicrobien à base d'une structure microcomposite composée de particules d'argent supportées dans l'ensemble d'une matrice de dioxyde de silicium amorphe, et d'un agent antimicrobien à base de silane.

11. Un article thermoformé comprenant la feuille multicouche selon l'une quelconque des revendications précédentes.

12. L'article thermoformé selon la revendication 11, où ledit article thermoformé comprend en sus une couche d'opercule comprenant un film, où ladite couche d'opercule est au moins partiellement en contact avec ladite couche de matériau de scellage.

13. L'article thermoformé selon la revendication 12, où ledit film comprend une polyoléfine sélectionnée dans le groupe constitué de polyéthylène, de polypropylène et de combinaisons de ceux-ci.

14. L'article thermoformé selon la revendication 12, où ledit film comprend une ou plusieurs couches.

15. Un procédé pour former un article thermoformé comprenant les étapes consistant :
à sélectionner une feuille multicouche selon l'une quelconque des revendications 1 à 10 ; et
à former ladite feuille multicouche en un article via un procédé de thermoformage.
